(19) Europäisches Patentamt
European Patent Office
Office européen des brevets

(11) **EP 4 455 367 A1**

(12) **EUROPEAN PATENT APPLICATION**
published in accordance with Art. 153(4) EPC

(43) Date of publication:
**30.10.2024 Bulletin 2024/44**

(21) Application number: **22910505.1**

(22) Date of filing: **29.09.2022**

(51) International Patent Classification (IPC):
*C25B 1/04* (2021.01)    *C25B 1/26* (2006.01)
*C25B 9/00* (2021.01)    *C25B 15/00* (2006.01)
*C25B 15/029* (2021.01)    *C25B 15/08* (2006.01)

(52) Cooperative Patent Classification (CPC):
**C25B 1/04; C25B 1/26; C25B 9/00; C25B 15/00;
C25B 15/029; C25B 15/08;** Y02E 60/36

(86) International application number:
**PCT/JP2022/036355**

(87) International publication number:
**WO 2023/119779 (29.06.2023 Gazette 2023/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.12.2021 JP 2021211341**

(71) Applicants:
• **NATIONAL UNIVERSITY CORPORATION
YOKOHAMA NATIONAL UNIVERSITY
Yokohama-shi
Kanagawa 240-8501 (JP)**
• **De Nora Permelec Ltd
Fujisawa-shi, Kanagawa 252-0816 (JP)**

(72) Inventors:
• **MISUMI Ryuta
Yokohama-shi, Kanagawa 240-8501 (JP)**
• **MITSUSHIMA Shigenori
Yokohama-shi, Kanagawa 240-8501 (JP)**
• **IKEDA Hayata
Yokohama-shi, Kanagawa 240-8501 (JP)**
• **NISHIKI Yoshinori
Fujisawa-shi, Kanagawa 252-0816 (JP)**
• **KATO Akihiro
Fujisawa-shi, Kanagawa 252-0816 (JP)**
• **NAKAI Takaaki
Fujisawa-shi, Kanagawa 252-0816 (JP)**

(74) Representative: **Wächtershäuser & Hartz
Patentanwaltspartnerschaft mbB
Weinstraße 8
80333 München (DE)**

(54) **AQUEOUS SOLUTION ELECTROLYSIS METHOD**

(57)    There is provided an aqueous solution electrolysis method that makes it possible to reduce the amount of bubbles covering an electrode and generate gases such as hydrogen and oxygen with excellent energy efficiency. The method is an electrolysis method for electrolyzing an aqueous-solution-based electrolyte to generate at least any one of hydrogen, oxygen, and chlorine, wherein the electrolyte contains a water-soluble alcohol. For example, as the electrolyte, an alkali aqueous solution containing about 0.1 to about 10% by volume of a water-soluble alcohol including a tertiary alcohol, such as 2-methylpropan-2-ol and 2-methylbutan-2-ol, and about 1 to 10 mol/L of an alkali component may be subjected to water electrolysis, and the electrolyte is electrolyzed using, for example, an electrolytic cell having an anode chamber and a cathode chamber.

[Figure 1]

EP 4 455 367 A1

## Description

### Technical Field

The present invention relates to an aqueous solution electrolysis method with good energy efficiency.

### Background Art

Hydrogen is a secondary energy source which is suitable for storage and transportation and has small environmental load, and therefore a hydrogen energy system using hydrogen as an energy carrier has been attracting attention. Currently, hydrogen is mainly produced by steam reforming of fossil fuel, or the like. However, from the viewpoint of problems of global warming and exhaustion of fossil fuel, hydrogen production by water electrolysis using renewable energy, such as solar power generation and wind power generation, is important. Water electrolysis is low cost, suitable for enlargement of scale, and therefore is a predominant technique for hydrogen production. When a water electrolyzer is used as hydrogen generation means, it is essential to lower the cell voltage in order to maintain high energy conversion efficiency.

Current practical water electrolysis is largely divided into two. One is alkaline water electrolysis, in which a high-concentration alkali aqueous solution is used for an electrolyte. The other is solid polymer electrolyte water electrolysis, in which a solid polymer electrolyte (SPE) membrane is used for an electrolyte. In the latter water electrolysis, a proton is used as an ion carrier, which enables low-voltage operation even at large current density, and therefore the solid polymer electrolyte water electrolysis has more excellent performance than the alkaline water electrolysis. However, when large-scale hydrogen production is performed by water electrolysis, the alkaline water electrolysis, in which an electrode using an inexpensive material, such as an iron group metal, is used, is more suitable than the solid polymer electrolyte water electrolysis, in which an electrode using a large amount of an expensive noble metal is used. Recently, excellent anion exchange membranes have been developed, and studies to overcome the problems of anion exchange membranes have progressed. In addition, brine electrolysis is one of various types of aqueous solution electrolysis that generates gases. In an electrolysis system that generates a chlorine gas and a hydrogen gas, acceleration of gas release remains as an important technical issue to improve energy efficiency.

In Non Patent Literature 1, the voltage across terminals, "CV," in an aqueous solution electrolysis cell is separated into components and expressed by the following formula (1).

$$CV = V_0 + \eta_{anode} + \eta_{cathode} + iR \quad \cdots(1)$$

$V_0$: theoretical decomposition voltage
$\eta_{anode}$: overpotential of anode
$\eta_{cathode}$: overpotential of cathode
iR = voltage loss due to resistance in electrodes, resistance of solution, and resistance of separator

A gas generated by a gas evolution reaction becomes bubbles and is retained on the surfaces of an electrode to decrease the reaction area of the electrode, and therefore the bubbles cause $\eta_{anode}$ and $\eta_{cathode}$ to increase. In addition, the bubbles are also retained in the electrolyte near the electrode and on the surface of the separator to make current distributions in the electrolyte and separator nonuniform, and therefore the bubbles also cause iR to increase. Accordingly, to reduce the voltage across terminals, bubbles generated by electrolysis need to be removed quickly from the surfaces of the electrodes.

Bubbles, which do not exhibit electric conductivity, increase the voltage due to resistance and increase overpotential of electrodes. For this reason, to decrease the cell voltage, a structure or means that quickly removes generated bubbles from the surfaces of electrodes and a separator is needed. A large number of techniques on improving structures of electrodes and separators have been reported in the field of brine electrolysis industry (Non Patent Literature 2), and examples thereof include providing an opening in an electrode substrate in order to remove generated bubbles quickly.

Alkaline water electrolysis is performed using an alkali aqueous solution having a high electric conductivity as an electrolyte at a high temperature where electric conductivity increases. However, with respect to a high-concentration alkali aqueous solution, corrosive action also becomes significant as the temperature increases, and therefore the upper limit of the operation temperature is limited to 60 to 90°C. However, even when such an alkali aqueous solution is used as an electrolyte, bubbles of oxygen and hydrogen are likely to accumulate on, for example, the surfaces of electrodes, which inhibits smooth electrolysis. On the other hand, a flow of the electrolyte caused by bubbles exhibits an action of an improvement in stirring and circulating the electrolyte, and therefore general-purpose cell structures making the most of natural circulation that is generated by differences in specific gravity of bubbles are also used among industrial-scale cells.

The electrolytic cell voltage has been reduced to 1.8 V or less at a current density of 0.6 A/cm$^2$ by, for example, the development of constitutional materials for an electrolytic cell and various piping materials which are resistant to a high-temperature and high-concentration alkali aqueous solution, the development of a low-resistivity separator, and the development of an electrode which has an enlarged surface area and has a highly-active catalyst applied thereon. However, there is a tendency that the current density is increased in order to enhance productivity. Then, there is concern that an influence of a shielding effect due to bubbles increases further, leading to a decrease in energy conversion efficiency.

Studies on an electrode catalyst that is one of the constitutional elements of a cell have progressed. Platinum group metals, platinum group metal oxides, valve metal oxides, iron group oxides, lanthanide group metal oxides, and the like have been proposed as an anode catalyst for oxygen generation which is used for alkaline water electrolysis. As other anode catalysts, alloy-based anode catalysts using nickel as a base, such as Ni-Co and Ni-Fe; nickel and nickel oxides having an enlarged surface area; spinel-based anode catalysts, such as $Co_3O_4$ and $NiCo_2O_4$; perovskite-based electrically conductive oxides, such as $LaCoO_3$ and $LaNiO_3$; oxides composed of a lanthanide group metal and a noble metal; and the like are also known (Non Patent Literature 3).

As a cathode catalyst for hydrogen generation, porous nickel having a large surface area, Ni-Mo-based materials, and the like are known. Besides, the cathode catalyst also include Raney nickel-based materials, such as Ni-Al, Ni-Zn, and Ni-Co-Zn; sulfide-based materials, such as Ni-S; and hydrogen absorbing alloy-based materials, such as $Ti_2Ni$; and the like. As other catalysts, metals, such as platinum, palladium, ruthenium, and iridium, and oxides thereof are utilized (Non Patent Literature 3). A catalyst having characteristics of low overpotential, high stability against short-circuit, and high poisoning resistance is preferable as the anode catalyst and also as the cathode catalyst.

In recent years, there has been proposed a self-healing technique wherein a nanosheet which is a catalyst precursor is added to an electrolyte to perform on-site formation of a catalyst on an electrode by electrolysis (Patent Literature 1). Particles having a negatively charged surface are adhered to an anode, and particles having a positively charged surface are adhered to a cathode. Nanoparticles disappear from an aqueous solution by electrodeposition.

Technical studies on bubble distribution, which is one of the causes for the increase in cell voltage, have progressed because of the growing interest in fine bubble technology, which has attracted attention recently. For example, it is reported that the bubble size increases up to 20 $\mu$m due to increases in current density and alkali concentration (Non Patent Literature 4). Note that a specific study to reduce the bubble effect has not been reported yet. In addition, removal of bubbles in alkaline water electrolysis utilizing pressure swing is reported (Non Patent Literature 5). Further, it is disclosed that by setting catalyst distribution on an electrode surface to 30 to 60% and particle size and surface roughness to 0.05 to 0.5 $\mu$m, the amount of dissolved hydrogen is increased (Patent Literature 2). Note that an influence on bubble behavior and cell voltage is not clarified.

Moreover, there is proposed an electrolytic cell that accelerates release of bubbles generated on an electrode surface using an electrode processed so as to have fine irregularities (Patent Literature 3). Further, it is proposed that stability of concentration of dissolved hydrogen molecules is improved by supplying an aqueous solution containing a dissolved hydrogen molecule stabilizing agent composed of a saccharide or polyphenol (Patent Literature 4). Furthermore, there is disclosed a method for generating oxygen nanobubble water by making bubble size small (Patent Literature 5). In Patent Literature 5, there is proposed formation of microbubbles by applying a shock wave generated by an underwater electric discharge of 200 to 300 V to bubbles having a diameter of 10 to 50 $\mu$m in an aqueous solution without using a surfactant or an organic substance. Note that it is known that zeta potential of microbubbles in an aqueous solution is changed by adding an alcohol, such as ethanol (Non Patent Literature 6).

In recent years, a technique of producing a high-pressure gas of 10 atm or higher by alkaline water electrolysis has been studied. During high-pressure operation, high-pressure-resistant materials need to be used in order to prevent leak of an electrolyte and secure safety. Such a technique has a merit of enabling reduction of the rate of gas bubble generation when pressure is high.

**Citation List**

**Patent Literature**

Patent Literature 1: International Publication No. WO 2020-184607
Patent Literature 2: Japanese Patent Laid-Open No. 2016-121382
Patent Literature 3: Japanese Patent Laid-Open No. 2017-31508
Patent Literature 4: Japanese Patent Laid-Open No. 2017-60941
Patent Literature 5: Japanese Patent No. 4080440

EP 4 455 367 A1

**Non Patent Literature**

Non Patent Literature 1: Denki Kagaku Binran (in Japanese), 6th Edition, 433(2009)
Non Patent Literature 2: Soda Handbook, 5th Edition, 61(2009)
Non Patent Literature 3: Hydrogen Energy System, vol. 36, No. 1, 11(2011)
Non Patent Literature 4: N. Nagai, Hydrogen Energy system, 30, 66(2005)
Non Patent Literature 5: M. Bakker, et.al., Electrochimica Acta, vol. 319, 148(2019)
Non Patent Literature 6: M. Takahashi, J. Physical Chemistry B, 109, 21858(2005)

**Summary of Invention**

**Technical Problem**

As described above, there have been disclosed various techniques on bubble control. However, there has not found yet an essential technique of chemically removing generated bubbles to improve energy conversion efficiency in aqueous solution electrolysis.

The present invention has been completed in view of such problems of conventional techniques, and an object of the present invention is to provide an aqueous solution electrolysis method that makes it possible to reduce the amount of bubbles covering an electrode and generate gases such as hydrogen and oxygen with excellent energy efficiency.

**Solution to Problem**

That is, according to the present invention, there is provided an aqueous solution electrolysis method, described below.

[1] An aqueous solution electrolysis method including electrolyzing an aqueous-solution-based electrolyte to generate at least any one of hydrogen, oxygen, and chlorine, wherein the electrolyte comprises a water-soluble alcohol.
[2] The aqueous solution electrolysis method according to [1], wherein the alcohol is a tertiary alcohol.
[3] The aqueous solution electrolysis method according to [2], wherein the tertiary alcohol is at least any one of 2-methylpropane-2-ol and 2-methylbutane-2-ol.
[4] The aqueous solution electrolysis method according to any one of [1] to [3], wherein the electrolyte is an alkali aqueous solution comprising an alkali component, and the concentration of the alkali component in the alkali aqueous solution is 1 to 10 mol/L.
[5] The aqueous solution electrolysis method according to any one of [1] to [4], wherein the concentration of the alcohol in the electrolyte is such that a surface tension of the electrolyte becomes 90% or less of a surface tension of a control electrolyte not containing the alcohol.
[6] The aqueous solution electrolysis method according to any one of [1] to [4], wherein the concentration of the alcohol in the electrolyte is 0.1 to 10% by volume.
[7] The aqueous solution electrolysis method according to any one of [1] to [6], wherein an electrolytic cell having an anode chamber and a cathode chamber is used, and the electrolyte that is common to the anode chamber and the cathode chamber is supplied to the anode chamber and the cathode chamber respectively to electrolyze the electrolyte.

**Advantageous Effects of Invention**

According to the present invention, it is possible to provide an aqueous solution electrolysis method that makes it possible to reduce the amount of bubbles covering an electrode and generate gases such as hydrogen and oxygen with excellent energy efficiency.

According to the aqueous solution electrolysis method of the present invention, it is possible to perform aqueous solution electrolysis with a lower voltage than in the conventional electrolysis methods. In addition, while the voltage can be decreased, the current to be applied can be increased, and therefore productivity can be enhanced. Further, even if conventional severe electrolysis conditions, such as electrolyte concentration and temperature, are lightened, aqueous solution electrolysis can be performed with the same or higher efficiency. Furthermore, potential fluctuation at an electrode is suppressed, and therefore it is expected to suppress deterioration, peeling, and the like of materials, such as an electrode catalyst and a separator.

**Brief Description of Drawings**

[Figure 1] Figure 1 is a schematic diagram showing an example of an electrolysis apparatus that carries out an aqueous solution electrolysis method of the present invention.

[Figure 2] Figure 2 is a graph showing nickel anode current-potential characteristics when electrolytes to which 2-methylpropan-2-ol is added are subjected to water electrolysis.

[Figure 3] Figure 3 is a graph showing nickel anode current-potential characteristics when electrolytes to which 2-methylpropan-2-ol and 2-methylbutan-2-ol are added respectively are subjected to water electrolysis.

[Figure 4] Figure 4 is a graph showing a nickel anode current-potential characteristic when an electrolyte to which ethanol is added is subjected to water electrolysis.

[Figure 5] Figure 5 is a graph showing a change in cell voltage when an electrolyte to which 2-methylpropan-2-ol is added is subjected to water electrolysis.

[Figure 6] Figure 6 is a graph showing changes in oxygen generation potential during long time operation.

[Figure 7] Figure 7 is a graph showing changes in interfacial tension versus concentrations of 2-methylpropan-2-ol, 2-methylbutan-2-ol, and ethanol.

[Figure 8A] Figure 8A is a micrograph showing a fine structure of bubbles generated when an alkali aqueous solution is electrolyzed.

[Figure 8B] Figure 8B is a micrograph showing a fine structure of bubbles generated when an alkali aqueous solution to which 2-methylpropan-2-ol is added is electrolyzed.

[Figure 8C] Figure 8C is a micrograph showing a fine structure of bubbles generated when an alkali aqueous solution to which 2-methylbutan-2-ol is added is electrolyzed.

[Figure 9] Figure 9 is a graph showing changes in interfacial tension versus concentrations of 2-methylpropan-2-ol, 2-methylbutan-2-ol, and pinacol.

**Description of Embodiments**

Hereinafter, embodiments of the present invention will be described, but the present invention is not limited to the following embodiments. An aqueous solution electrolysis method of the present invention is an aqueous solution electrolysis method including electrolyzing an aqueous-solution-based electrolyte to generate at least any one of hydrogen, oxygen, and chlorine, wherein the electrolyte contains a water-soluble alcohol. Specifically, the aqueous solution electrolysis method of the present invention is a method for electrolyzing an aqueous-solution-based electrolyte to which a water-soluble alcohol is added. By electrolyzing an electrolyte to which a water-soluble alcohol is added, adhering of bubbles to an electrode surface can be suppressed, coalescence of bubbles in the vicinity of an electrode is suppressed, so that the amount of bubbles covering an electrode can be reduced. Thereby, gases, such as hydrogen, oxygen, and chlorine, can be generated with excellent energy efficiency.

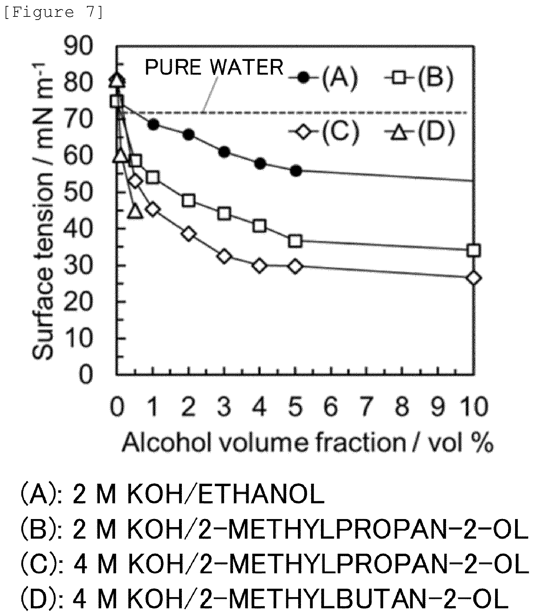

It is not necessarily clear that the reason why the amount of bubbles covering an electrode can be reduced by electrolyzing an electrolyte to which a water-soluble alcohol is added, but a change in interfacial tension (surface tension) is considered to be one of the factors. Figure 7 is a graph showing changes in interfacial tension versus concentrations of 2-methylpropan-2-ol, 2-methylbutan-2-ol, and ethanol. As the aqueous solution, two types of aqueous solutions, a 2 M (2 mol/L) KOH aqueous solution and a 4 M (4 mol/L) KOH aqueous solution, are used. As shown in Figure 7, it can be seen that the interfacial tension of each aqueous solution decreases with an increase in the concentration of each of 2-methylpropan-2-ol, 2-methylbutan-2-ol, and ethanol, which are water-soluble alcohols, in other words, it can be seen that the solution property changes significantly.

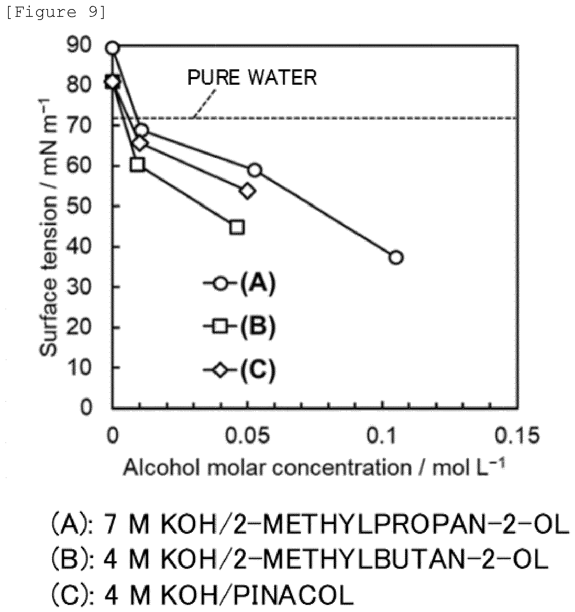

Figure 9 is a graph showing changes in interfacial tension versus concentrations of 2-methylpropan-2-ol, 2-methylbutan-2-ol, and pinacol. As for 2-methylpropan-2-ol, a 7 M (7 mol/L) KOH aqueous solution was used. As for 2-methylbutan-2-ol, a 4 M (4 mol/L) KOH aqueous solution was used. As for pinacol, a 4 M (4 mol/L) KOH aqueous solution was used. As shown in Figure 9, it can be seen that by dissolving pinacol, which is a tertiary alcohol, the interfacial tension of an alkali aqueous solution is decreased, which is the same as in the case where 2-methylpropan-2-ol or 2-methylbutan-2-ol was dissolved.

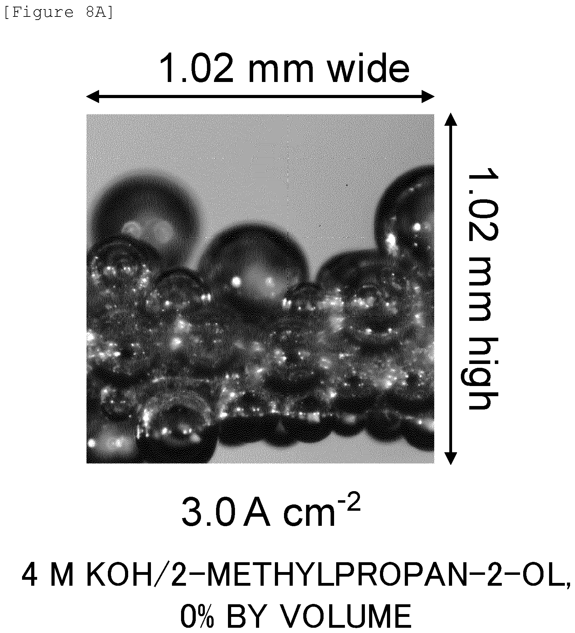

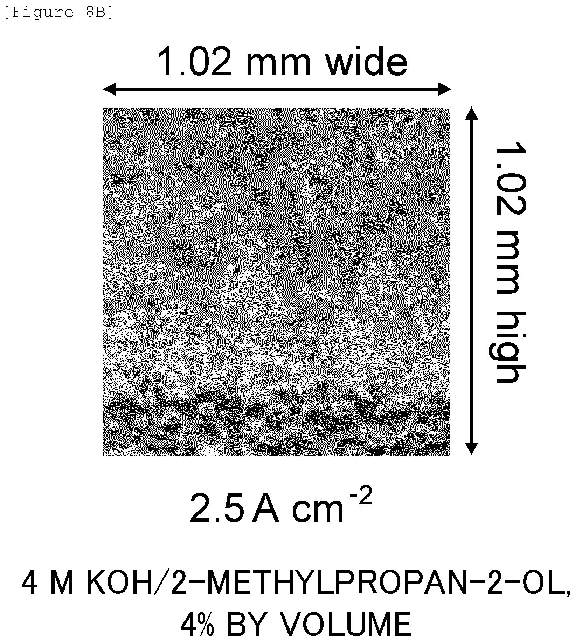

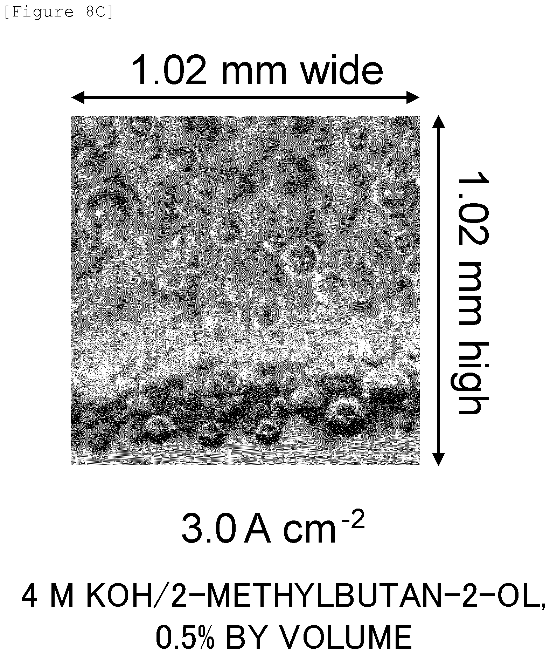

By adding a water-soluble alcohol to an electrolyte, it is made possible to confirm by microscopic high-speed video imaging that bubbles generated on an electrode surface by electrolysis are released into the electrolyte while remaining small. Figure 8A is a micrograph showing a fine structure of bubbles generated when an alkali aqueous solution is electrolyzed. Figure 8B is a micrograph showing a fine structure of bubbles generated when an alkali aqueous solution to which 2-methylpropan-2-ol is added is electrolyzed, and Figure 8C is a micrograph showing a fine structure of bubbles generated when an alkali aqueous solution to which 2-methylbutan-2-ol is added is electrolyzed. As shown in Figures 8A to 8C, it can be seen that by adding a water-soluble alcohol to an electrolyte, the diameters of bubbles generated by electrolysis are made smaller.

Further, a change in zeta potential is also considered to be one of the factors to reduce the amount of bubbles covering an electrode. Non Patent Literature 6 shows a change in zeta potential versus concentration of ethanol and a change in zeta potential versus concentration of 1-propanol. It can be seen that zeta ($\zeta$) potential decreases and electric charge amount of bubbles decreases with an increase in alcohol concentration. When the zeta potential is negative at the surfaces of fine oxygen bubbles, attractive force to a positively charged anode acts on the oxygen bubbles. It is considered that the negative electrification of the oxygen bubbles is relaxed by the presence of a water-soluble alcohol and the attractive force action to the positively charged anode is reduced.

(Water-Soluble Alcohol)

The water-soluble alcohol is preferably capable of dissolving in water at a sufficient concentration and is preferably an alcohol that is stable even during aqueous solution electrolysis. Further, an alcohol having a relatively high boiling point is preferably used because such an alcohol is likely to be applicable to use under a high temperature condition. Specific examples of the water-soluble alcohol include ethanol, 1-propanol, 2-propanol, butanol, 2-methylpropan-2-ol, 2-methylbutan-2-ol, 2-methylpentan-2-ol, 2-methylhexan-2-ol, 2-methylheptan-2-ol, 3-methylpentan-3-ol, 3-methyloctan-3-ol, and 2,3-dimethyl-2,3-butanediol (pinacol).

To stably maintain the effect of releasing oxygen bubbles generated during oxygen evolution reaction, an alcohol having a structure that is hardly susceptible to oxidative decomposition is preferably used. Among others, a tertiary alcohol is preferable, and an alcohol not containing a structure, such as a carbon-carbon double bond and a benzene ring, is preferable. Specific examples of such an alcohol include 2-methylpropan-2-ol, 2-methylbutan-2-ol, 2-methylpentan-2-ol, 2-methylhexan-2-ol, 2-methylheptan-2-ol, 3-methylpentan-3-ol, 3-methyloctan-3-ol, 2,3-dimethyl-2,3-butanediol (pinacol). Among others, 2-methylpropan-2-ol is preferable because it has a compact structure in which the -OH group is surrounded by the methyl groups, and therefore is unlikely to decompose and has extremely high water-solubility and also has a high boiling point (82.3°C).

In addition, 2-methylbutan-2-ol is also preferable because it has a compact structure in which the -OH group is surrounded by the methyl groups, and therefore is unlikely to decompose and has extremely high water-solubility (about 120 g/L) and also has a high boiling point (about 102°C). In alkaline water electrolysis, an anolyte and a catholyte are common, and therefore not only the potential of the cathode where hydrogen is generated but also the potential of the anode where oxygen is generated is required to be stable. From the above viewpoint, 2-methylpropan-2-ol or 2-methylbutan-2-ol is preferably used.

The concentration of the water-soluble alcohol in the electrolyte is preferably set to a concentration where the interfacial tension (surface tension) of the electrolyte decreases moderately. Specifically, the concentration of the water-soluble alcohol in the electrolyte is preferably a concentration where the surface tension of the electrolyte is 90% or less, more preferably 80% or less, particularly preferably 75% or less, of the surface tension of an electrolyte (control electrolyte) not containing the water-soluble alcohol. In addition, the concentration of the water-soluble alcohol in the electrolyte is preferably set to 0.1 to 10% by volume, more preferably 0.1 to 8% by volume, particularly preferably 0.1 to 6% by volume, taking the solubility to an aqueous solution and the effect of reducing the interfacial tension (surface tension) into consideration.

(Electrolysis Apparatus and Operation Method (Aqueous Solution Electrolysis Method))

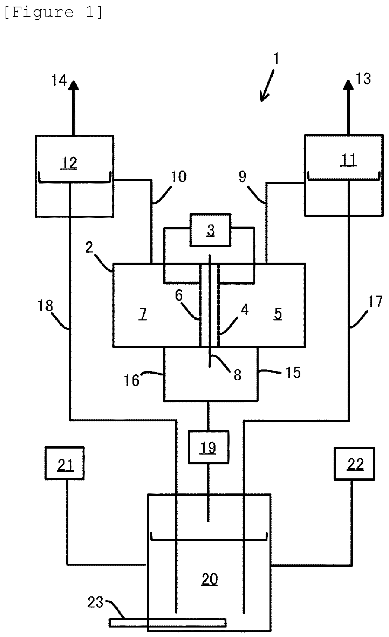

When operating a DC power source using renewable energy as electric power, it is preferable to construct a control system in which frequent power shutdowns do not directly affect an electrolysis cell. Figure 1 is a schematic diagram showing an example of an electrolysis apparatus that carries out the aqueous solution electrolysis method of the present invention. The electrolysis apparatus 1 shown in Figure 1 includes an electrolytic cell 2. The electrolytic cell 2 includes an anode chamber 5 having an anode 4 and a cathode chamber 7 having a cathode 6, and the anode 4 and the cathode 6 are disposed so as to face each other through a separator 8. In order to reduce cell voltage, the electrodes (anode 4 and cathode 6) are preferably brought closer to each other. The electrolytic cell 2 is assembled using the anode 4, the cathode 6, the separator 8, and a gasket having corrosion resistance. By driving an electrolyte supply pump 19, the electrolyte in an electrolyte tank 20 heated with a heater 23 can be supplied to the electrolytic cell 2. After the electrolytic cell 2 is filled with the electrolyte, a DC power supply 3 is started, and the current is gradually increased to start electrolysis. The water-soluble alcohol may be preliminarily added to the electrolyte which is supplied into the anode chamber 5 and the cathode chamber 7, or may be added after the electrolysis is started. Note that the electrolysis is preferably configured so as to be performed supplying a common electrolyte in the electrolyte tank 20 to each of the anode chamber 5 and the cathode chamber 7, because such a configuration simplifies the apparatus as a whole and allows easy replenishment of the electrolyte that becomes insufficient due to volatilization or the like by simply adding the water-soluble alcohol to the electrolyte in the electrolyte tank 20.

The lower the temperature, the lower the electric conductivity of a solution and the higher the electrode overpotential and cell voltage. On the other hand, the higher the temperature, the larger the evaporation amount of the added alcohol. Therefore, the temperature during electrolysis is preferably set to 40 to 90°C. In addition, the higher the pressure, the smaller the volume of bubbles and the more the decrease in cell voltage is expected. However, the higher the pressure, the more required is design of expensive materials having durability and safety enough to prevent leakage from the electrolytic cell, and therefore the pressure during electrolysis is preferably set to normal pressure to 30 atm. In aqueous solution electrolysis processes put into practical use, the current density is 0.5 to 2 $A/cm^2$. However, the effects are exhibited even at a high current density (2 to 10 $A/cm^2$).

The electrolyte containing generated fine oxygen bubbles reaches an oxygen gas separator 11 through oxygen gas/anolyte piping 9 and is separated into a gas (oxygen gas 13) and a liquid. The separated liquid is recovered into the electrolyte tank 20 through anolyte return pipe 17. On the other hand, the electrolyte containing generated fine hydrogen bubbles reaches a hydrogen gas separator 12 through hydrogen gas/catholyte piping 10 and is separated into a gas (hydrogen gas 14) and a liquid. The separated liquid is recovered into the electrolyte tank 20 through catholyte return piping 18. The water consumed by electrolysis is replenished by supplying the pure water in the raw material pure water tank 21 into the system. When the amount of the added water-soluble alcohol is reduced by water electrolysis, an additive tank 22 including a pump may be provided to replenish the reduced amount appropriately. The materials for forming piping, tanks, and the like to be used are preferably materials exhibiting resistance to a high-temperature alkali aqueous solution, and for example, polytetrafluoroethylene (PTFE), stainless steel, and the like are preferable.

(Electrically Conductive Substrate)

The electrodes (anode and cathode) usually include an electrically conductive substrate and a catalyst layer provided on a surface of the electrically conductive substrate. The electrically conductive substrate is an electric conductor that conducts electricity and is also an element having a function as a carrier that carries the catalyst layer. At least a surface of the electrically conductive substrate is formed with nickel or a nickel base alloy. The whole of the electrically conductive substrate may be formed with nickel or a nickel base alloy, or only a surface of the electrically conductive substrate may be formed with nickel or a nickel base alloy. The electrically conductive substrate may be such that a coating layer of nickel or a nickel base alloy is formed on a surface of a metal material, such as iron, stainless steel, aluminum, and titanium, by plating or the like.

The thickness of the electrically conductive substrate is preferably 0.05 to 5 mm. The shape of the electrically conductive substrate is preferably a shape having an opening for removing bubbles of oxygen, hydrogen, and the like to be produced. For example, an expanded mesh or a porous expanded mesh can be used as the electrically conductive substrate. When the electrically conductive substrate has a shape having an opening, the aperture ratio (area ratio) of the electrically conductive substrate is preferably 10 to 95%. The anode and the cathode may be formed with electrically conductive substrates having similar properties.

(Pre-treatment of Electrically Conductive Substrate)

The electrically conductive substrate is preferably subjected to a chemical etching treatment in advance for the purpose of removing contamination particles of a metal, an organic substance, and the like adhering to the surfaces. In addition, a surface of the electrically conductive substrate is preferably subjected to a roughening treatment in advance for the purpose of enhancing the adhesiveness to the catalyst layer. Examples of the roughening treatment include a blast treatment in which a powder is sprayed, an etching treatment using an acid that can dissolve the substrate, and plasma spraying. Usually, the larger the surface area of a catalyst and more porous the catalyst is, the higher the activity can be expected.

(Catalyst Layer and Intermediate Layer)

A catalyst for alkali water electrolysis is preferably one that has a small overpotential and is inexpensive. However, when water electrolysis is performed using renewable energy, a catalyst that has resistance against frequent electric power shutdowns is preferably used. In addition, in order to maintain stability of the catalyst and the electrically conductive substrate, an intermediate layer is preferably provided between the catalyst layer and the electrically conductive material.

In order to improve reverse current resistance, forming a catalyst on an intermediate layer formed on an electrically conductive substrate has also been proposed. It has been reported that an intermediate layer provided on an anode and formed with a lithium-containing nickel oxide has electric conductivity sufficient for water electrolysis, and exhibits excellent physical strength and chemical stability even when it is used for a long time. As for an electrode to be disposed so as to be in contact with a separator, the surface of the electrode is preferably smooth so as not to break the separator and is preferably hydrophilic.

(Separator)

As the separator, asbestos, non-woven fabric, an ionexchange membrane, a porous polymer membrane, and a composite membrane of an inorganic substance and an organic polymer, and the like can be used. More specifically, an ion-permeable separator such that organic fiber cloth is incorporated in a mixture of a hydrophilic inorganic material, such as a calcium phosphate compound and calcium fluoride, and an organic binding material, such as polysulfone, polypropylene, and polyvinylidene fluoride, can be used. In addition, an ion-permeable separator such that stretched organic fiber cloth is incorporated in a film-forming mixture of an inorganic hydrophilic substance in the form of particles, such as oxides and hydroxides of antimony and zirconium, and an organic binder, such as a fluorocarbon polymer, polysulfone, polypropylene, polyvinyl chloride, and polyvinyl butyral, can also be used. By using a thin separator, the voltage loss due to resistance can be reduced. However, when a thin separator is used, the performance of separating an oxygen gas and a hydrogen gas from each other is lowered. For this reason, a hydrophilic separator having an appropriate thickness is preferably used, and specifically, the thickness is preferably 0.05 to 1 mm.

(Electrolyte)

As the aqueous-solution-based electrolyte, an alkali aqueous solution containing an alkali component that is an electrolyte, and a metal chloride aqueous solution containing a metal chloride, such as sodium chloride (common salt) and potassium chloride, can be used. As the alkali component, an alkali metal hydroxide, such as potassium hydroxide (KOH) and sodium hydroxide (NaOH), is preferably used. The concentration of the alkali component in the alkali aqueous solution which is used as the electrolyte is preferably 1 to 10 mol/L because the electric conductivity is large and electric power consumption can be suppressed. In addition, the concentration of the metal chloride in the metal chloride aqueous solution is preferably 1 to 5 mol/L.

**Examples**

Hereinafter, the present invention will specifically be described based on Examples, but the present invention is not limited to these Examples. Note that "parts" and "%" in Examples and Comparative Examples are each on a mass basis unless otherwise noticed.

(Example 1)

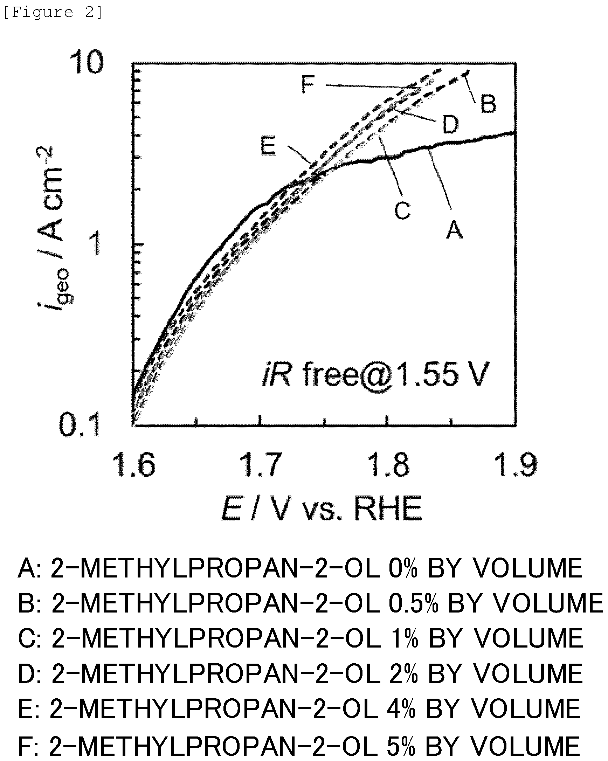

Nickel wire (diameter 0.2 mm) was used as an anode, and 4 mol/L potassium hydroxide (KOH) aqueous solutions to which 2-methylpropan-2-ol (0.5 to 5% by volume) was added were subjected to water electrolysis at a solution temperature of 30°C. Figure 2 shows a graph (broken lines) showing nickel anode current-potential characteristics when the water electrolysis was performed. Note that the percentage (%) of surface tension of each potassium hydroxide (KOH) aqueous solution to which 2-methylpropan-2-ol was added, based on the surface tension, as the standard (100%), of a potassium hydroxide (KOH) aqueous solution to which 2-methylpropan-2-ol was not added, is as follows.

- 2-Methylpropan-2-ol 0.5% by volume: 66%
- 2-Methylpropan-2-ol 1% by volume: 56%
- 2-Methylpropan-2-ol 2% by volume: 48%
- 2-Methylpropan-2-ol 4% by volume: 37%
- 2-Methylpropan-2-ol 5% by volume: 37%

(Comparative Example 1)

Water electrolysis was performed in the same manner as in Example 1, described above, except that a 4 mol/L potassium hydroxide (KOH) aqueous solution to which 2-methylpropan-2-ol was not added was used. Figure 2 shows a graph (solid line) showing a nickel anode current-potential characteristic. As shown in Figure 2, it can be seen that a range where the anode potential is lowered (oxygen overpotential is decreased) is present under a higher current density by the addition of 2-methylpropan-2-ol.

(Example 2)

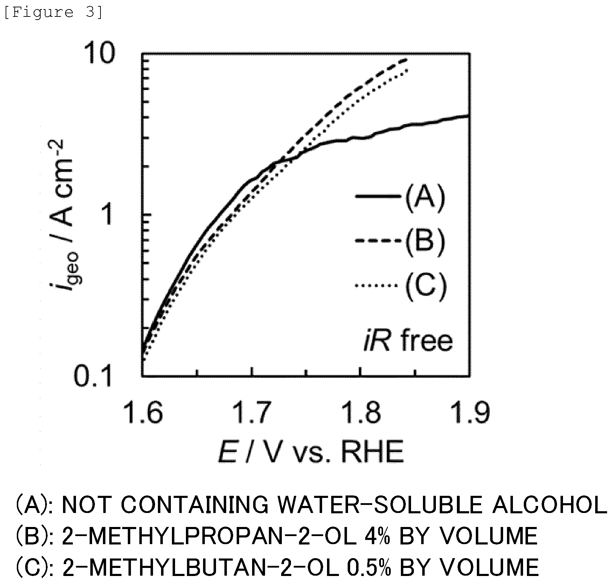

Nickel wire (diameter 0.2 mm) was used as an anode, and 4 mol/L potassium hydroxide (KOH) aqueous solutions to which 2-methylpropan-2-ol (4% by volume) and 2-methylbutan-2-ol (0.5% by volume) were added respectively were subjected to water electrolysis at a solution temperature of 30°C. Figure 3 shows a graph (dotted line and broken line) showing nickel anode current-potential characteristics when the water electrolysis was performed. Note that the percentage (%) of surface tension of each potassium hydroxide (KOH) aqueous solution to which 2-methylpropan-2-ol or 2-methylbutan-2-ol was added, based on the surface tension, as the standard (100%), of a potassium hydroxide (KOH) aqueous solution to which neither of the alcohols was added, is as follows.

- 2-Methylpropan-2-ol 4% by volume: 37%
- 2-Methylbutan-2-ol 0.5% by volume: 56%

(Comparative Example 2)

Water electrolysis was performed in the same manner as in Example 2, described above, except that a 4 mol/L potassium hydroxide (KOH) aqueous solution to which 2-methylbutan-2-ol was not added was used. Figure 3 shows a graph (solid line) showing a nickel anode current-potential characteristic. As shown in Figure 3, it can be seen that a range where the anode potential is lowered (oxygen overpotential is decreased) is present under a higher current density by the addition of 2-methylbutan-2-ol.

(Example 3)

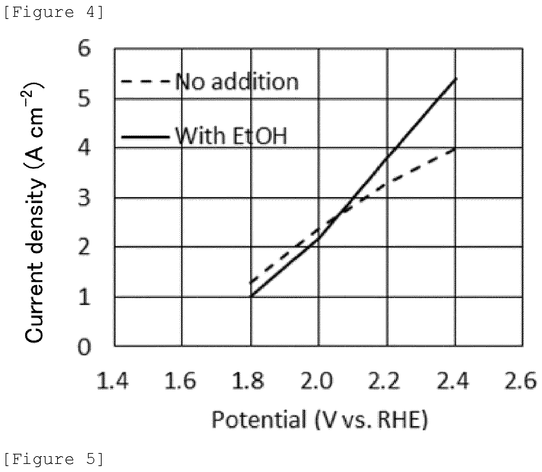

Water electrolysis was performed in the same manner as in Example 1, described above, except that a 4 mol/L potassium hydroxide (KOH) aqueous solution to which ethanol (4% by volume) was added was used. Figure 4 shows a graph (solid line) showing a nickel anode current-potential characteristic. Note that the percentage (%) of surface tension of the potassium hydroxide (KOH) aqueous solution to which ethanol was added, based on the surface tension, as the standard (100%), of a potassium hydroxide (KOH) aqueous solution to which ethanol was not added, was 78%.

(Comparative Example 3)

Water electrolysis was performed in the same manner as in Example 3, described above, except that a 4 mol/L potassium hydroxide (KOH) aqueous solution to which ethanol was not added was used. Figure 4 shows a graph (broken line) showing a nickel anode current-potential characteristic. As shown in Figure 4, it can be seen that a range where the anode potential is lowered (oxygen overpotential is decreased) is present under a higher current density by the addition of ethanol.

(Example 4)

An anode such that a $NiCoO_x$ catalyst is formed on a surface of a nickel expanded mesh (6.0 mm LW $\times$ 3.7 mm SW $\times$ 0.9 mm ST $\times$ 0.8 mm T) by a thermal decomposition method was prepared. A cathode such that a $RuPrO_x$ catalyst is formed on a plane weave mesh (#40) made of nickel by a thermal decomposition method was prepared. As a separator, "Zirfon Perl-UTP 500A," trade name, manufactured by Agfa-Gevaert NV was prepared. An electrolytic cell was assembled using the prepared anode, cathode, and separator. The effective projection area of the electrodes/separator was set to 19 cm$^2$. As an electrolyte, a 4 mol/L potassium hydroxide (KOH) aqueous solution was prepared. This electrolyte was supplied to the electrolytic cell at a rate of 30 mL/min to perform water electrolysis for 48 hours under a condition of a current density of 1 A/cm$^2$ at 40°C and then further perform water electrolysis for 1,000 seconds under a condition of 1.2 A/cm$^2$. Subsequently, 2-methylpropan-2-ol was added to the electrolyte in the anode chamber so as to make the concentration of 2-methylpropan-2-ol 4% by volume to further perform water electrolysis for 1,000 seconds. Thereafter, 2-methylpropan-2-ol was added to the electrolyte in the cathode chamber so as to make the concentration of 2-methylpropan-2-ol 4% by volume to further perform water electrolysis. Note that the percentage (%) of surface tension of the electrolyte to which 2-methylpropan-2-ol (4% by volume) was added, based on the surface tension, as the standard (100%), of an electrolyte to which 2-methylpropan-2-ol was not added, was 37%.

Figure 5 shows a graph showing a change in cell voltage when the electrolyte to which 2-methylpropan-2-ol was added was subjected to water electrolysis. As shown in Figure 5, it can be seen that the cell voltage was decreased by the addition of 2-methylpropan-2-ol. In addition, generated bubbles were observed to find that the sizes of the bubbles were rapidly reduced and the number of bubbles was increased by the addition of 2-methylpropan-2-ol. A phenomenon was ascertained in which bubbles were quickly released from the electrodes and the electrolyte, which was transparent before 2-methylpropan-2-ol was added, became clouded.

Note that the cell voltage is defined as follows.

- $V_0$: Cell voltage before 2-methylpropan-2-ol is added to the anode chamber

- $V_1$: Cell voltage when 2-methylpropan-2-ol is added to the anode chamber

- $V_2$: Cell voltage when 2-methylpropan-2-ol is added to the cathode chamber

From the results shown in Figure 5, changes in cell voltage were calculated as follows, and it was ascertained that the cell voltage was decreased by the addition of 2-methylpropan-2-ol.

- $$V_1 - V_0 = 18 \text{ mV}$$

- $$V_2 - V_0 = 23 \text{ mV}$$

(Example 5)

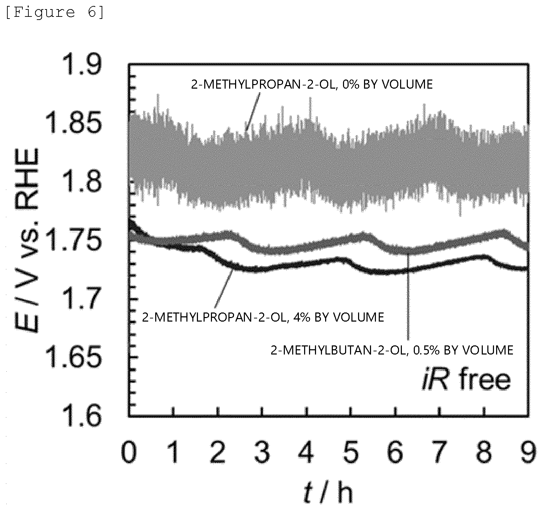

4 mol/L potassium hydroxide (KOH) aqueous solutions to which 2-methylpropan-2-ol (4% by volume) and 2-methylbutan-2-ol (0.5% by volume) were added respectively were continuously subjected to water electrolysis using nickel wire (diameter 0.2 mm) as an anode at a current density of 3 A/cm$^2$. Note that the percentage (%) of surface tension of each potassium hydroxide (KOH) aqueous solution to which 2-methylpropan-2-ol or 2-methylbutan-2-ol was added, based on the surface tension, as the standard (100%), of a potassium hydroxide (KOH) aqueous solution to which neither of the alcohols was added, is as follows. Figure 6 shows a graph showing changes in oxygen generation potential during long time operation. As shown in Figure 6, it can be seen that the anode potential stably exhibited lowered potential by the addition of 2-methylpropan-2-ol or 2-methylbutan-2-ol and the effect was stably exhibited for a long time even under electrolysis.

- 2-Methylpropan-2-ol 4% by volume: 37%
- 2-Methylbutan-2-ol 0.5% by volume: 56%

(Comparative Example 4)

Water electrolysis was continuously performed in the same manner as in Example 5, described above, except that a 4 mol/L potassium hydroxide (KOH) aqueous solution was used without adding neither 2-methylpropan-2-ol nor 2-methylbutan-2-ol. As a result, as shown in Figure 6, it can be seen that the anode potential varied significantly by an influence of bubbles adhering to the surface of the electrode and exhibited higher potential than in Example 5. This suggests that the addition of 2-methylpropan-2-ol or 2-methylbutan-2-ol also contributes to an improvement in durability of the electrode.

**Industrial Applicability**

According to the aqueous solution electrolysis method of the present invention, electrolysis can be performed at a lower voltage than the cell voltage under conventional electrolysis conditions. When the electric power of a power source is fixed, a current to be applied can be increased because the voltage can be reduced, so that the productivity can be enhanced. Even if severe conventional electrolysis conditions, such as alkali concentration and temperature, are relaxed, electrolysis can be performed with the same electrolysis efficiency as in conventional electrolysis; durability of cell materials for electrodes, separator, and the like can be improved; and applications to uses other than alkaline water electrolysis can also be expected.

**Reference Signs List**

1    Electrolysis apparatus
2    Electrolytic cell
3    DC power source
4    Anode
5    Anode chamber

6      Cathode
7      Cathode chamber
8      Separator
9      Oxygen gas/anolyte piping
10     Hydrogen gas/catholyte piping
11     Oxygen gas separator
12     Hydrogen gas separator
13     Oxygen gas
14     Hydrogen gas
15     Anolyte supply piping
16     Catholyte supply piping
17     Anolyte return piping
18     Catholyte return piping
19     Electrolyte supply pump
20     Electrolyte tank
21     Raw material pure water tank
22     Additive tank
23     Heater

**Claims**

1.   An aqueous solution electrolysis method comprising electrolyzing an aqueous-solution-based electrolyte to generate at least any one of hydrogen, oxygen, and chlorine, wherein
     the electrolyte comprises a water-soluble alcohol.

2.   The aqueous solution electrolysis method according to claim 1, wherein the alcohol is a tertiary alcohol.

3.   The aqueous solution electrolysis method according to claim 2, wherein the tertiary alcohol is at least any one of 2-methylpropane-2-ol and 2-methylbutane-2-ol.

4.   The aqueous solution electrolysis method according to any one of claims 1 to 3, wherein

     the electrolyte is an alkali aqueous solution comprising an alkali component, and
     the concentration of the alkali component in the alkali aqueous solution is 1 to 10 mol/L.

5.   The aqueous solution electrolysis method according to any one of claims 1 to 4, wherein
     the concentration of the alcohol in the electrolyte is such that a surface tension of the electrolyte becomes 90% or less of a surface tension of a control electrolyte not containing the alcohol.

6.   The aqueous solution electrolysis method according to any one of claims 1 to 4, wherein the concentration of the alcohol in the electrolyte is 0.1 to 10% by volume.

7.   The aqueous solution electrolysis method according to any one of claims 1 to 6, wherein

     an electrolytic cell having an anode chamber and a cathode chamber is used, and
     the electrolyte that is common to the anode chamber and the cathode chamber is supplied to the anode chamber and the cathode chamber respectively to electrolyze the electrolyte.

[Figure 1]

[Figure 2]

A: 2-METHYLPROPAN-2-OL 0% BY VOLUME
B: 2-METHYLPROPAN-2-OL 0.5% BY VOLUME
C: 2-METHYLPROPAN-2-OL 1% BY VOLUME
D: 2-METHYLPROPAN-2-OL 2% BY VOLUME
E: 2-METHYLPROPAN-2-OL 4% BY VOLUME
F: 2-METHYLPROPAN-2-OL 5% BY VOLUME

[Figure 3]

(A): NOT CONTAINING WATER-SOLUBLE ALCOHOL
(B): 2-METHYLPROPAN-2-OL 4% BY VOLUME
(C): 2-METHYLBUTAN-2-OL 0.5% BY VOLUME

[Figure 4]

[Figure 5]

[Figure 6]

[Figure 7]

(A): 2 M KOH/ETHANOL
(B): 2 M KOH/2-METHYLPROPAN-2-OL
(C): 4 M KOH/2-METHYLPROPAN-2-OL
(D): 4 M KOH/2-METHYLBUTAN-2-OL

[Figure 8A]

1.02 mm wide

1.02 mm high

$3.0\ A\ cm^{-2}$

4 M KOH/2-METHYLPROPAN-2-OL,
0% BY VOLUME

[Figure 8B]

## 1.02 mm wide

1.02 mm high

## 2.5 A cm$^{-2}$

## 4 M KOH/2-METHYLPROPAN-2-OL, 4% BY VOLUME

[Figure 8C]

1.02 mm wide

1.02 mm high

$3.0\,A\,cm^{-2}$

4 M KOH/2–METHYLBUTAN–2–OL,
0.5% BY VOLUME

[Figure 9]

(A): 7 M KOH/2-METHYLPROPAN-2-OL
(B): 4 M KOH/2-METHYLBUTAN-2-OL
(C): 4 M KOH/PINACOL

## INTERNATIONAL SEARCH REPORT

| International application No. |
|---|
| **PCT/JP2022/036355** |

**A.    CLASSIFICATION OF SUBJECT MATTER**

*C25B 1/04*(2021.01)i; *C25B 1/26*(2006.01)i; *C25B 9/00*(2021.01)i; *C25B 15/00*(2006.01)i; *C25B 15/029*(2021.01)i; *C25B 15/08*(2006.01)i

FI:    C25B1/04; C25B15/00 302Z; C25B15/029; C25B15/08 302; C25B1/26 A; C25B9/00 A; C25B9/00 Z

According to International Patent Classification (IPC) or to both national classification and IPC

**B.    FIELDS SEARCHED**

Minimum documentation searched (classification system followed by classification symbols)

C25B1/04; C25B1/26; C25B9/00; C25B15/00; C25B15/029; C25B15/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 63-229122 A (SHIRAKAWA SEISAKUSHO KK) 26 September 1988 (1988-09-26) claims, p. 9, lower left column, line 11 to p. 10, upper right column, line 8, p. 9, lower left column, lines 1-5 | 1, 4-6 |
| X | US 2014/0014525 A1 (PHILLIPS 66 COMPANY) 16 January 2014 (2014-01-16) claim 1, paragraphs [0031], [0033], [0045] | 1, 4-7 |
| X | JP 2014-167151 A (KOBE STEEL LTD) 11 September 2014 (2014-09-11) claims 1, 3-4, 7, paragraphs [0004], [0052], [0062]-[0064] | 1, 4-7 |
| X | US 2008/0302670 A1 (MESA ENERGY, LLC) 11 December 2008 (2008-12-11) claims 1, 6, paragraph [0046] | 1, 4-6 |
| X | JP 2007-246953 A (NIPPON TELEGR & TELEPH CORP <NTT>) 27 September 2007 (2007-09-27) claims 1, 3, paragraphs [0040], [0064]-[0065] | 1-3, 5-6 |
| X | JP 2021-143367 A (AIST) 24 September 2021 (2021-09-24) claims 1-2, 9, paragraphs [0011], [0017], [0042]-[0043] | 1-3, 5-7 |

☐ Further documents are listed in the continuation of Box C.      ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **14 November 2022** | **29 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/036355**

| Patent document cited in search report | | | Publication date (day/month/year) | Patent family member(s) | | | Publication date (day/month/year) |
|---|---|---|---|---|---|---|---|
| JP | 63-229122 | A | 26 September 1988 | (Family: none) | | | |
| US | 2014/0014525 | A1 | 16 January 2014 | WO | 2014/014825 | A1 | |
| JP | 2014-167151 | A | 11 September 2014 | (Family: none) | | | |
| US | 2008/0302670 | A1 | 11 December 2008 | (Family: none) | | | |
| JP | 2007-246953 | A | 27 September 2007 | (Family: none) | | | |
| JP | 2021-143367 | A | 24 September 2021 | (Family: none) | | | |

Form PCT/ISA/210 (patent family annex) (January 2015)

**REFERENCES CITED IN THE DESCRIPTION**

**Patent documents cited in the description**

- WO 2020184607 A
- JP 2016121382 A
- JP 2017031508 A
- JP 2017060941 A
- JP 4080440 B

**Non-patent literature cited in the description**

- Denki Kagaku Binran. 2009, 433
- Soda Handbook. 2009, 61
- *Hydrogen Energy System,* 2011, vol. 36 (1), 11
- **N. NAGAI.** *Hydrogen Energy system,* 2005, vol. 30, 66
- **M. BAKKER.** *Electrochimica Acta,* 2019, vol. 319, 148
- **M. TAKAHASHI.** *J. Physical Chemistry B,* 2005, vol. 109, 21858